(19) Europäisches Patentamt / European Patent Office / Office européen des brevets

(11) **EP 2 862 635 B1**

(12) **EUROPÄISCHE PATENTSCHRIFT**

(45) Veröffentlichungstag und Bekanntmachung des Hinweises auf die Patenterteilung:
**27.02.2019 Patentblatt 2019/09**

(51) Int Cl.:
**B06B 1/06** (2006.01)     **G01N 3/32** (2006.01)

(21) Anmeldenummer: **14189356.0**

(22) Anmeldetag: **17.10.2014**

(54) **Vorrichtung zur Erzeugung mechanischer Schwingungen und Verfahren zur Berechnung der Resonanzfrequenz einer solchen Vorrichtung**

Device for generating mechanical vibrations and method for calculating the resonance frequency of such a device

Dispositif destiné à produire des oscillations mécaniques et procédé de calcul de la fréquence de résonance d'un tel dispositif

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.10.2013 DE 102013221096**

(43) Veröffentlichungstag der Anmeldung:
**22.04.2015 Patentblatt 2015/17**

(73) Patentinhaber: **Rolls-Royce Deutschland Ltd & Co KG**
**15827 Blankenfelde-Mahlow (DE)**

(72) Erfinder:
• **Lindner, Maik**
  **15712 Königs Wusterhausen**
  **OT Zernsdorf (DE)**
• **Schnitzler, Jan**
  **10823 Berlin (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
EP-A1- 0 758 455     EP-A1- 2 503 317
DE-A1- 2 939 923     DE-A1- 10 114 672

EP 2 862 635 B1

## Beschreibung

Die Erfindung betrifft eine Vorrichtung zur Erzeugung mechanischer Schwingungen gemäß dem Oberbegriff des Patentanspruchs 1 und ein Verfahren zur Berechnung der Resonanzfrequenz einer solchen Vorrichtung.

Es ist bekannt, die Lebensdauer von Testobjekten durch Ermüdungstests zu bewerten. Hierzu wird das Testobjekt mit einer Resonanzfrequenz des Testobjekts angeregt. Die Anregung erfolgt mittels einer Vorrichtung zur Erzeugung mechanischer Schwingungen bzw. mittels eines Schwingungserzeugers, der ein piezoelektrisches Anregungssystem und zwei durch dieses gekoppelte Massen umfasst. Die Testobjekte, an denen Ermüdungstests durchgeführt werden, sind beispielsweise Triebwerkskomponenten, beispielsweise Leit- oder Laufschaufeln einer Turbine.

Um zu erreichen, dass ein Testobjekt in einer Resonanzfrequenz angeregt wird, ist es erforderlich, dass der Schwingungserzeuger ebenfalls in der Resonanzfrequenz des Testobjektes schwingt. Hierzu muss die Eigenfrequenz des Schwingungserzeugers mit der des Testobjekts übereinstimmen. Zusätzlich muss das Wechselspannungssignal, das an den Schwingungserzeuger angelegt wird, diese Frequenz aufweisen.

Piezoelektrische Anregungssysteme basieren auf dem inversen Piezoeffekt und werden u.a. im Bereich der Ermüdungstests eingesetzt. Der allgemeine Aufbau besteht aus zwei miteinander verschraubten Massen und dazwischen angeordneten Piezoelementen, welche unter einer mechanischen Vorspannung stehen. Eine der Massen dient als Joch, in dem das Testobjekt eingeklemmt wird. Die Eigenfrequenz eines solchen piezoelektrischen Anregungssystems ist abhängig von dem Piezomaterial des Piezoelements und den beteiligten Massen. Die Eigenfrequenz ist somit durch die konstruktiven Begebenheiten des piezoelektrischen Anregungssystems festgelegt. Um unterschiedliche Resonanzfrequenzen für unterschiedliche Testobjekte erzeugen zu können, sind eine Mehrzahl von piezoelektrischen Anregungssystemen vorzuhalten, die jeweils eine unterschiedliche Eigenfrequenz aufweisen.

Es ist als nachteilig anzusehen, dass die bekannten piezoelektrischen Anregungssysteme jeweils nur eine Eigenfrequenz bzw. eine enge Bandbreite von Eigenfrequenzen bedienen können und eine Vielzahl solcher piezoelektrischen Anregungssysteme vorzuhalten ist, um unterschiedliche Resonanzfrequenzen zu bedienen. Es besteht ein Bedarf nach einer Vorrichtung zur Erzeugung mechanischer Schwingungen, die im Hinblick auf ihre Eigenfrequenz einstellbar ist und dementsprechend zur Erzeugung von Resonanzen von Testobjekten in einem großen Frequenzbereich einsetzbar ist.

Die Druckschriften EP 2 503 317, DE 101 14 672 sowie EP 0 758 455 offenbaren jeweils eine Vorrichtung zur Erzeugung mechanischer Schwingungen mit jeweils einer ersten und zweiten Masse sowie einen piezoelektrischen Stapel.

Dementsprechend liegt der vorliegenden Erfindung die Aufgabe zugrunde, eine Vorrichtung zur Erzeugung mechanischer Schwingungen bereitzustellen, deren Eigenfrequenz veränderlich und damit auf die Resonanzfrequenz eines Testobjekts einstellbar ist.

Weiter ist anzustreben, bei einer Vorrichtung zur Erzeugung mechanischer Schwingungen, bei der die Eigenfrequenz einstellbar ist, die Einstellung einer gewünschten Eigenfrequenz nicht durch die versuchsweise Änderung von Parametern, sondern durch analytische Prognosen im Rahmen eines mathematischen Modells zu bestimmen, so dass eine gewünschte Eigenfrequenz der Vorrichtung ohne Zeitverlust einstellbar ist.

Dementsprechend liegt der vorliegenden Erfindung ebenfalls die Aufgabe zugrunde, ein Verfahren zur Berechnung der Resonanzfrequenz einer Vorrichtung zur Erzeugung mechanischer Schwingungen bereitzustellen.

Diese Aufgaben werden erfindungsgemäß durch eine Vorrichtung mit den Merkmalen des Anspruchs 1 und ein Verfahren mit den Merkmalen des Anspruchs 8 gelöst.

Ausgestaltungen der Erfindung sind in den Unteransprüchen angegeben.

Danach sieht die erfindungsgemäße Vorrichtung vor, dass das piezoelektrische Anregungssystem, über das eine erste Masse und eine zweite Masse der Vorrichtung mechanisch miteinander gekoppelt sind, derart ausgebildet ist, dass seine Steifigkeit einstellbar ist. Die erste Masse und die zweite Masse sind dabei nicht Bestandteil des in seiner Steifigkeit einstellbaren piezoelektrischen Anregungssystems.

Die erfindungsgemäße Lösung nutzt die Tatsache aus, dass ein piezoelektrisches Anregungssystem, das zwei Massen mechanisch miteinander koppelt, naturgemäß eine bestimmte Steifigkeit aufweist. Die erfindungsgemäße Lösung beruht auf der Erkenntnis, dass diese Steifigkeit die Eigenfrequenz der aus den beiden Massen und dem piezoelektrischen Anregungssystem gebildeten Vorrichtung mitbestimmt und dass durch Änderung der Steifigkeit die Eigenfrequenz einstellbar ist. Insbesondere bestimmt die Dehnsteifigkeit des piezoelektrischen Anregungssystems die Eigenfrequenz der Vorrichtung im Falle von Schwingungen mit, die in Längsrichtung des piezoelektrischen Anregungssystems eingebracht werden.

In der mathematischen Modellierung kann das Gesamtsystem durch einen Zweimassenschwinger beschrieben werden, wobei die beiden Massen durch eine Feder miteinander gekoppelt sind, und wobei die Federkonstante der Steifigkeitskonstanten des piezoelektrischen Anregungssystems entspricht. Durch Einstellen der Steifigkeit des piezoelektrischen Anregungssystems wird in der mathematischen Modellierung die Federkonstante der Feder, die die beiden Massen miteinander koppelt, geändert und damit auch die Eigenfrequenz des Gesamtsystems.

Dabei gilt, dass eine Reduzierung der Steifigkeit des piezoelektrischen Anregungssystems zu einer Absenkung der Eigenfrequenz der Vorrichtung und eine Erhöhung der Steifigkeit des piezoelektrischen Anregungssystems zu einer Erhöhung der Eigenfrequenz der Vorrichtung führen.

Gemäß einer Ausgestaltung der Erfindung weist das piezoelektrische Anregungssystem eine Mehrzahl piezoelektrischer Scheiben auf, die aneinander anliegen und einen Stapel bilden. Es ist vorgesehen, dass das piezoelektrische Anregungssystem zur Einstellung seiner Steifigkeit im Hinblick auf die Anzahl und/oder die Größe der piezoelektrischen Scheiben variabel einstellbar ist. Parameter, die die Größe einer piezoelektrischen Scheibe definieren, sind beispielsweise die Dicke und der Durchmesser bzw. die Querschnittsfläche der Scheiben. Gemäß dieser Erfindungsvariante kann die Steifigkeit des piezoelektrischen Anregungssystems über die Anzahl und/oder die Größe der piezoelektrischen Scheiben variabel eingestellt werden. Wird beispielsweise die Anzahl der Scheiben des Anregungssystems erhöht, reduziert sich die Steifigkeit des Anregungssystems, was zu einer reduzierten Eigenfrequenz der Vorrichtung führt.

Um zu erreichen, dass das piezoelektrische Anregungssystem im Hinblick auf Anzahl und/oder Größe der piezoelektrischen Scheiben variabel einstellbar ist, ist gemäß einer Ausführungsvariante der Erfindung vorgesehen, dass die piezoelektrischen Scheiben eine Lochung aufweisen, so dass die Scheiben auf eine Verbindungsstange aufschiebbar oder aufdrehbar sind, die die erste Masse und die zweite Masse miteinander verbindet. Dabei kann vorgesehen sein, dass die Verbindungsstange als Gewindestange ausgebildet ist und an ihren Enden mit den beiden Massen der Schwingungserzeugungsvorrichtung verschraubt ist. Im Bereich zwischen den beiden Massen sind auf die Gewindestange die piezoelektrischen Scheiben aufgedreht oder aufgeschoben, die dabei einen Stapel einer definierten Länge bilden. Auf diese Weise können Anzahl und/oder Größe der piezoelektrischen Scheiben des Stapels variiert werden, bei identischer oder auch geänderter Stapelhöhe.

Gemäß einer weiteren Ausgestaltung der Erfindung ist die erste Masse als Joch ausgebildet, in das ein Testobjekt einsetzbar und einklemmbar ist. Die zweite Masse stellt eine Schwungmasse des Systems dar. In das Joch, das die erste Masse ausbildet, wird beispielsweise eine im Hinblick auf ihre Ermüdungseigenschaften zu testende Leitschaufel oder Laufschaufel einer Triebwerkskomponente eingespannt.

Zur Einstellung der Eigenfrequenz der erfindungsgemäßen Vorrichtung kann vorgesehen sein, dass zusätzlich zu der Steifigkeit des piezoelektrischen Anregungssystems weitere Parameter der Vorrichtung geändert und zur Bereitstellung einer gewünschten Eigenfrequenz variiert werden.

Eine weitere Möglichkeit, die Eigenfrequenz der Vorrichtung zu verändern, besteht in der Einstellbarkeit der ersten und/oder der zweiten Masse. Da die Eigenfrequenz von den beiden Massen abhängt, die durch das piezoelektrische Anregungssystem miteinander gekoppelt sind, kann über die Wahl der Massen Einfluss auf die Eigenfrequenz genommen werden. Hierbei kann beispielsweise vorgesehen sein, dass die jeweiligen Massen beispielsweise durch Anschrauben von Zusatzgewichten einstellbar ausgebildet sind. Auch kann vorgesehen sein, dass die erste Masse und/oder die zweite Masse mit unterschiedlichen Gewichten vorgehalten werden und jeweils in einfacher Weise austauschbar sind, beispielsweise durch die Bereitstellung von Schraubverbindungen mit dem verbindenden piezoelektrischen Anregungssystem.

Gemäß einer weiteren Erfindungsvariante ist die Eigenfrequenz der erfindungsgemäßen Vorrichtung dadurch veränderbar, dass das Massenverhältnis zwischen der ersten Masse und der zweiten Masse einstellbar ist. Je größer der Massenunterschied zwischen den beiden Massen ist, desto breiter ist das Frequenzband, das im Resonanzbereich erzeugt wird. Dementsprechend ist die Energieübertragung im Resonanzbereich vergleichsweise gering. Je kleiner der Massenunterschied dagegen ist, desto schmaler ist das Frequenzband im Resonanzbereich. In diesem Fall erfolgt im Resonanzbereich eine vergleichsweise große Energieübertragung. Dabei wird eine größere Energieübertragung bzw. Beschleunigung in der verhältnismäßig kleineren Masse bereitgestellt.

Gemäß einer weiteren Erfindungsvariante ist die Eigenfrequenz der erfindungsgemäßen Vorrichtung dadurch veränderbar, dass das piezoelektrische Anregungssystem im Hinblick auf das Material der piezoelektrischen Scheiben einstellbar ist. Die Stärke des inversen piezoelektrischen Effektes wird über das piezoelektrische Material der Scheiben bestimmt, so dass über die Wahl des Materials die Eigenfrequenz einstellbar ist. Beispielsweise werden hierzu piezoelektrische Scheiben aus unterschiedlichen Materialien vorgehalten, die durch Aufschieben auf eine Gewindestange in einfacher Weise auswechselbar sind. Bei dieser Erfindungsvariante erfolgt eine Änderung der Eigenfrequenz ebenfalls durch eine Einstellbarkeit der Steifigkeit des piezoelektrischen Anregungssystems, da das Material der piezoelektrischen Scheiben die Steifigkeit des piezoelektrischen Anregungssystems mitbestimmt.

Es wird allgemein darauf hingewiesen, dass die mechanische Vorspannung der einzelnen Komponenten der Vorrichtung derart gewählt ist, dass eine maximale Kopplung und Energieübertragung zwischen der ersten Masse und der zweiten Masse durch das piezoelektrische Anregungssystem gegeben ist. Die Vorspannung kann beispielsweise mittels Schrauben und/oder Muttern einer Schraubverbindung zwischen den beiden Massen und dem piezoelektrischen Anregungssystem festgelegt werden.

In weiteren Ausgestaltungen der Erfindung sind weitere Parameter der erfindungsgemäßen Vorrichtung zur Änderbarkeit der Eigenfrequenz der Vorrichtung einstellbar. Beispielsweise kann vorgesehen sein, dass zusätzlich die Höhe der Betriebsspannung, mit der das piezoelektrische Anregungssystem beaufschlagt wird, einstellbar ist. Experimentelle Untersuchungen haben gezeigt, dass die Resonanzfrequenz bei einer Erhöhung der Betriebsspannung leicht abnimmt.

Gemäß einer weiteren Ausgestaltung der Erfindung ist an mindestens einer der beiden Massen der erfindungsgemäßen Vorrichtung mehr als ein Befestigungsmittel zur Befestigung des piezoelektrischen Anregungssystems ausgebildet, wobei das piezoelektrische Anregungssystem an jedem der Befestigungsmittel wahlweise befestigbar ist. Hierzu kann beispielsweise vorgesehen sein, dass mindestens eine der Massen mehrere ebene Montageflächen und eine in diesen jeweils mittig angeordnete Bohrung zur Aufnahme einer Gewindestange aufweist. Insbesondere kann vorgesehen sein, dass solche unterschiedlichen Montageflächen an der Masse ausgebildet sind, die das Joch bildet. Durch Verbinden des piezoelektrischen Anregungssystems mit dem Joch an unterschiedlichen Montageflächen wird der Winkel der Krafteinleitung jeweils verändert, wodurch die Eigenfrequenz der Vorrichtung änderbar ist bzw. andere Mode angeregt werden kann.

Die vorliegende Erfindung betrifft auch ein Verfahren zum Einstellen der Resonanzfrequenz einer Vorrichtung zur Erzeugung mechanischer Schwingungen, die eine erste Masse, eine zweite Masse und ein diese Massen mechanisch miteinander koppelndes piezoelektrisches Anregungssystem aufweist, dessen Steifheit einstellbar ist. Das Verfahren umfasst die folgenden Schritte:

- Erfassen von Parametern, die die Steifigkeit des piezoelektrischen Anregungssystems definieren,
- Berechnen der Resonanzfrequenz der Vorrichtung unter Verwendung dieser Parameter sowie der ersten und der zweiten Masse,
- wobei die Berechnung der Resonanzfrequenz auf der Grundlage der Bewegungsgleichungen eines Zweimassenschwingers erfolgt.

Die Bewegungsgleichungen eines Zwei-Massen-Schwingers werden dabei durch die Bewegungsgleichung:

$$\underline{M}\ddot{x} + \underline{B}\dot{x} - \underline{K}x = f(t)$$

beschrieben, wobei $\underline{M}$ die Massenmatrix, $\underline{B}$ die Dämpfungsmatrix, $\underline{K}$ die Steifigkeitsmatrix, $\underline{x}$ die Bewegungsrichtung einer Masse und $\underline{f}$ die Frequenz angibt.

Bei einer vereinfachten Betrachtung, die eine Dämpfung des Systems außer Betracht lässt und ausschließlich eine longitudinale Bewegungsrichtung der beiden Massen betrachtet, ergibt sich die Resonanzfrequenz nach der Formel:

$$(f_2)_{1,2} = {+ \atop -} \frac{1}{2\Pi} \sqrt{\frac{k(m_1 + m_2)}{m_1 m_2}}.$$

wobei m1 die erste Masse, m2 die zweite Masse, k die Steifigkeitskonstante (d.h. die Steifigkeit) des Gesamtsystems , und $(f_2)_{1,2}$ die Resonanzfrequenz bezeichnet.

Die Steifigkeitskonstante des Gesamtsystems setzt sich aus der Steifigkeit der in Reihe geschalteten Massen und der Komponenten des im Hinblick auf seine Steifigkeit einstellbaren piezoelektrischen Anregungssystems zusammen.

Für den Fall, dass das piezoelektrische Anregungssystem aus einer Vielzahl piezoelektrischer Scheiben besteht, die zusammen mit Elektroden auf eine die zu koppelnden Massen verbindende Gewindestange aufgebracht sind (im Folgenden auch als "Piezostapel" bezeichnet), setzt sich die Steifigkeitskonstante des Gesamtsystems zusammen aus der Steifigkeit der in Reihe geschalteten, auf die Gewindestange aufgebrachten Massen, der Steifigkeit der Elektroden, der Steifigkeit der piezoelektrischen Scheiben sowie der Steifigkeit der dazu in parallel geschalteten Gewindestange. Gemäß einer Ausführungsvariante wird die Steifigkeit des Gesamtsystems nach folgender Formel berechnet:

$$k = \frac{1}{\sum_{i=1}^{n} \frac{1}{k_{m,i}} + \frac{1}{k_{Piezo}} + \frac{1}{k_{Elektrode}}} + k_{M16}$$

Dabei geben $k_{m,i}$ die Steifigkeitskonstante der i-ten Masse $m_i$, $k_{Piezo}$ die Steifigkeitskonstante der piezoelektrischer Scheiben, $k_{Elektrode}$ die Steifigkeitskonstante der Elekroden und $k_{M16}$ die Steifigkeitskonstante der Gewindestange an. Bei den Massen $m_i$ handelt es insbesondere um eine Schwungmasse und ggf. weitere Massen, die sich auf der Gewindestange befinden, wie z.B. die Massen von Zusatzplatten.

Als Parameter, die die Steifigkeit $k_{Piezo}$ der piezoelektrischen Scheiben bestimmen, werden dabei gemäß einer Ausgestaltung Anzahl, Größe (insbesondere Durchmesser und Dicke), Form und/oder Material der piezoelektrischen Scheiben bestimmt. Gemäß einer Ausführungsvariante wird die Steifigkeit der piezoelektrischen Scheiben nach folgender Formel berechnet:

$$k_{Piezo} = \frac{A}{S_{33}^E * d * n}$$

Dabei ist $k_{Piezo}$ die Steifigkeitskonstante der piezoelektrischen Scheiben des piezoelektrischen Anregungssystems, n die Anzahl der piezoelektrischen Scheiben, d die Dicke der piezoelektrischen Scheiben, A die Fläche einer piezoelektrischen Scheibe und $S_{33}^E$ der Elastizitätskoeffizient des Materials der piezoelektrischen Scheiben in deren Längsrichtung. Der Nachgiebigkeits- oder Elastizitätskoeffizient $S_{33}^E$ ist dabei definiert als das Verhältnis der relativen Deformation S zur mechanischen Spannung T.

Die Steifigkeitskonstante ergibt sich also aus dem Quotienten von Scheibenfläche und dem Produkt der drei Faktoren $S_{33}^E$, d und n. Die Steifigkeitskonstante besitzt die Einheit $kg*s^{-2}$.

Die Steifigkeitskonstante der Elektroden des piezoelektrischen Anregungssystems wird nach folgender Formel berechnet:

$$k_{Elektrode} = \frac{E * A_{ers}}{L * n}$$

Die Steifigkeitskonstante der jeweiligen auf die Gewindestange aufgebrachten Massen wird nach folgender Formel berechnet:

$$k_{m,i} = \frac{E * A_{ers}}{L}$$

Dabei ist $k_{m,i}$ die Steifigkeitskonstante der jeweiligen Masse $m_i$, E das materialspezifische Elastizitätsmodul, $A_{ers}$ die Ersatzquerschnittsfläche, n die Anzahl der identischen Elektroden und L die Massenlänge in Längsrichtung. Die Steifigkeitskonstante $k_{Elektrode}$ resultiert somit aus einem Quotienten bestehend aus dem im Zähler stehenden Produkt der zwei Faktoren E und $A_{ers}$ und dem im Nenner stehenden Produkt aus der Massenlänge L und der Anzahl n. Die Steifigkeitskonstante $k_{m,i}$ resultiert somit aus einem Quotienten bestehend aus dem im Zähler stehenden Produkt der zwei Faktoren E und $A_{ers}$ und der im Nenner stehenden Massenlänge L. Die Steifigkeitskonstante besitzt die Einheit $kg*s^{-2}$.

Die Ersatzquerschnittsfläche $A_{ers}$ der jeweiligen Massen und Elektroden wird für den Fall, dass diese eine zylindrische Form aufweisen, in Abhängigkeit der nachfolgenden Fallunterscheidung nach der Formel berechnet:

$$wenn\ D_a \leq d_w, gilt: A_{ers} = \frac{\pi}{4}(D_a^2 - D_i^2)$$

$$wenn\ d_w \leq D_a \leq d_w + L, gilt: A_{ers} = \frac{\pi}{4}(d_w^2 - D_i^2) + \frac{\pi}{8}d_w(D_a - d_w)\left[\left(\sqrt[3]{\frac{L * d_w}{D_a^2}} + 1\right)^2 - 1\right]$$

$$wenn\ D_a > d_w + L, gilt: A_{ers} = \frac{\pi}{4}(d_w^2 - D_i^2) + \frac{\pi}{8}d_w * L\left[\left(\sqrt[3]{\frac{L * d_w}{(L + d_w)^2}} + 1\right)^2 - 1\right]$$

Dabei ist $D_a$ der Außendurchmesser der jeweiligen Masse m, $D_i$ der Innendurchmesser der jeweiligen Masse m, L die Massenlänge in Längsrichtung und $d_w$ der Außendurchmesser der kraftübertragenden Fläche einer Masse oder Elektrode. Die Ersatzquerschnittsfläche $A_{ers}$ besitzt die Einheit $m^2$.

Die kraftübertragende Fläche ist dabei die jeweils kleinere Auflagefläche zwischen benachbarten Massen oder Elektroden. Die Ersatzquerschnittsfläche stellt ein Maß für den Kraftfluss zwischen zwei benachbarten Massen oder Elektroden dar.

Die Steifigkeitskonstante $k_{M16}$ der Gewindestange wird nach folgender Formel berechnet:

$$k_{M16} = \frac{E * A_S}{L}$$

Dabei ist $k_{M16}$ die Steifigkeitskonstante der Gewindestange, E das materialspezifische Elastizitätsmodul, $A_s$ die Spannungsquerschnittsfläche und L die Länge in Gewindestange.

Wie bereits im Hinblick auf die erfindungsgemäße Vorrichtung ausgeführt, kann das erfindungsgemäße Berechnungsverfahren weitere Parameter berücksichtigen, die die Eigenfrequenz der Schwingungserzeugervorrichtung mitbestimmen.

Für den Fall, dass die durch das erfindungsgemäße Verfahren berechnete Resonanzfrequenz ungleich einer gewünschten Resonanzfrequenz ist, kann vorgesehen werden, dass mindestens ein Parameter, der die Steifigkeit des piezoelektrischen Anregungssystems beeinflusst, neu eingestellt wird, um eine gewünschte Eigenfrequenz zu erreichen. Dabei kann vorgesehen sein, dass ein Computerprogramm, dass das Verfahren ausführt, Vorschläge für eine Parameterwahl unterbreitet, die zu einer gewünschten Eigenfrequenz führt.

Die Erfindung betrifft auch ein Computerprogramm mit Software-Code zur Durchführung der Verfahrensschritte des Anspruchs 9, wenn das Computerprogramm auf einem Computer ausgeführt wird.

Die Erfindung wird nachfolgend unter Bezugnahme auf die Figuren der Zeichnung anhand eines Ausführungsbeispiels näher erläutert. Es zeigen:

Figur 1      eine perspektivische Ansicht eines Ausführungsbeispiels einer erfindungsgemäßen Vorrichtung zur Erzeugung mechanischer Schwingungen;

Figur 2      eine Schnittansicht der Vorrichtung der Figur 1;

Figur 3      ein mathematischer Modell der Vorrichtung der Figur 1;

Figur 4      das Resonanzverhalten der Vorrichtung der Figur 1 in Abhängigkeit von der Anzahl der piezoelektrischen Scheiben;

Figur 5A,    5B das Resonanzverhalten der Vorrichtung der Figur 1 in Abhängigkeit von der Massenverteilung;

Figur 6      das Resonanzverhalten der Vorrichtung der Figur 1 in Abhängigkeit von der elektrischen Betriebsspannung;

Figur 7      eine Benutzeroberfläche eines Computerprogramms, das auf der Grundlage von Systemparametern die Resonanzfrequenz der Vorrichtung der Figur 1 berechnet, wobei über die Benutzeroberfläche die für die Berechnung notwendigen Systemparameter eingebbar sind, und

Figur 8      eine weitere Benutzeroberfläche eines Computerprogramms, das auf der Grundlage von Systemparametern die Resonanzfrequenz der Vorrichtung der Figur 1 berechnet.

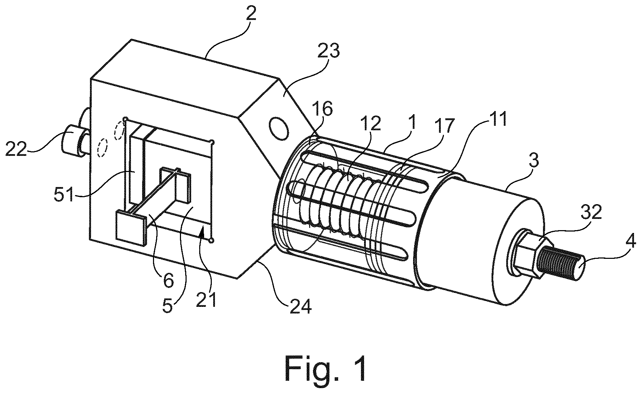

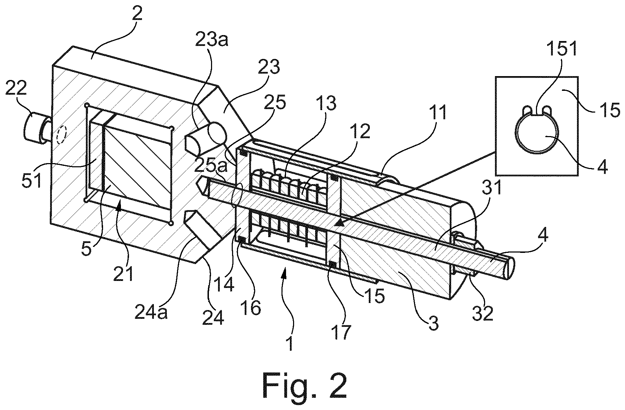

Die Figuren 1 und 2 zeigen eine erfindungsgemäße Vorrichtung zum Erzeugen mechanischer Schwingungen. Die Vorrichtung weist als Hauptkomponenten eine erste Masse 2, eine zweite Masse 3 sowie ein die beiden Massen 2, 3 mechanisch koppelndes piezoelektrisches Anregungssystem 1 auf.

Die erste Masse 2 bildet ein Joch, das der Aufnahme und Einspannung eines Testobjekts 6, im vorliegenden Fall einer Schaufel einer Triebwerkskomponente, dient. Hierzu weist das Joch 2 eine Aussparung 21 auf, in der ein Klemmbock 5 angeordnet ist, in den das Testobjekt 6 durch Verschraubung eingespannt ist. Dabei kann vorgesehen sein, dass der Klemmbock 5 mittels eines elastischen Elementes 51 fest in der Aussparung 21 angeordnet ist.

In den Klemmbock 2 sind des Weiteren auf der dem piezoelektrischen Anregungssystem 1 abgewandten Seite Bolzen 22 einsetzbar, die beispielsweise der Fixierung der Vorrichtung an einer angrenzenden Struktur dienen.

Das Joch 2 umfasst des Weiteren drei Montageflächen 23, 24, 25, die jeweils mittig mit einer Bohrung 23a, 24a, 25a versehen sind (beispielsweise einer Gewindebohrung), wobei die drei Montageflächen 23, 24, 25 in einem Winkel von beispielsweise 40° zueinander angeordnet sind. An jede dieser Montageflächen 23, 24, 25 kann das piezoelektrische Anregungssystem 1 angeschraubt und angekoppelt werden.

Die zweite Masse 3 stellt eine Schwungmasse dar. Sie besitzt eine mittige Bohrung 31, über die die zweite Masse 3 auf eine Verbindungsstange, z.B. eine Gewindestange 4 geschraubt oder gesteckt ist, die durch die zweite Masse 3 und das piezoelektrische Anregungssystem 1 verläuft und die die beiden Massen 2, 3 und das piezoelektrische Anregungssystem 1 miteinander verbindet. So ist das eine Ende der Gewindestange 4 in die Bohrung 25a der Masse 2 eingeschraubt. Die Massen 2, 3 sind über die Gewindestange 4 miteinander verschraubt und vorgespannt.

Zwischen den beiden Massen 2, 3 befindet sich das piezoelektrische Anregungssystem 1, das eine Mehrzahl piezoelektrischer Scheiben 12 aufweist, die aneinander anliegen und einen Stapel bilden. Zwischen den piezoelektrischen Scheiben 12 befindet sich jeweils eine Elektrode 13, die beispielsweise aus Messing besteht und die eine Lötstelle für einen elektrischen Anschluss besitzt. Die Elektroden 13 sind elektrisch parallel geschaltet, so dass an allen Elektroden 13 die gleiche Spannung anliegt. Zusätzlich sind die erste und die letzte Komponente des Stapels als Elektrode 13 ausgebildet. Den Stapel aus piezoelektrischen Scheiben 12 (auch als "Piezostapel" bezeichnet) umgibt ein Schutzrohr 11.

Die piezoelektrischen Scheiben 12 sowie die Elektroden 13 sind mittig gelocht und werden als Einheit durch die Gewindestange 4 konzentrisch positioniert. Dabei wird die Gewindestange 4 zusätzlich durch einen Silikonschlauch elektrisch isoliert. Vor und hinter dem durch die piezoelektrischen Scheiben 12 gebildeten Stapel befindet sich jeweils eine Zusatzplatte 14, 15, welche jeweils, wie in der vergrößerten Darstellung der Fig. 2 dargestellt, mit einem zahnähnlichen Steg 151 in die Nut der Gewindestange 4 greift. Durch die Zusatzplatten 14, 15 wird eine Übertragung eines Drehmoments beim Vorspannen der Vorrichtung auf die Piezoelemente 12 verhindert.

Des Weiteren weisen die Zusatzplatten 14, 15 auf ihrer äußeren Zylinderfläche jeweils eine Umfangsnut auf, in der jeweils ein O-Ring 16, 17 eingepasst ist. Die Dichtungsringe 16, 17 dienen der Führung des Schutzrohrs 11, welches den Bereich der piezoelektrischen Elemente 12 umschließt.

Das Schutzrohr 11 weist entlang seines Umfangs verteilte Langlöcher auf, die es ermöglichen, Druckluft auf den Stapel piezoelektrischer Scheiben 12 zu blasen, um entstehende Wärme abzutransportieren.

Die Montagereihenfolge ist derart, dass zunächst die piezoelektrische Anordnung 1 montiert und das Gewinderohr 4 in der Bohrung 25a des Jochs 2 verschraubt wird (in beliebiger Reihenfolge). Anschließend wird die zweite Masse 3 hinter der Zusatzplatte 15 auf die Gewindestange 4 geschoben und mit einer abschließenden Mutter 32 und einer Unterlegscheibe fixiert. Die mechanische Vorspannung des Systems erfolgt durch ein drehmomentgesteuertes Anziehverfahren. Mit anderen Worten kann durch Anziehen der Mutter 32 und/oder ein Verdrehen des Jochs 2 die mechanische Vorspannung, d. h. der Grad der mechanischen Kopplung zwischen den beiden Massen 2, 3 eingestellt werden.

Nicht dargestellt in den Figuren 1 und 2 ist ein elektrischer Anschluss, über den eine Wechselspannung an die Elektroden 13 zur periodischen Erzeugung des inversen piezoelektrischen Effektes angelegt wird. Durch den inversen piezoelektrischen Effekt und aufgrund der mechanischen Kopplung der Masse 2 mit dem piezoelektrischen Anregungssystem 1 und dessen Kopplung mit der Masse 3 wird die Masse 2 bzw. das Joch in Schwingungen versetzt, die über den Klemmblock 5 auf das Testobjekt 6 übertragen werden.

Um den Resonanzfall zu erreichen, d. h. eine Anregung des Testobjekts 6 mit einer seiner Resonanzfrequenzen, ist es erforderlich, dass auch die Vorrichtung und damit das Joch 2 mit einer der Resonanzfrequenzen schwingt. Dies bedeutet, dass die Eigenfrequenz der aus den Komponenten 1, 2, 3 bestehenden Vorrichtung mit der Resonanzfrequenz des Testobjektes 6 übereinstimmen oder näherungsweise übereinstimmen muss, da anderenfalls die zugeführte Energie sich nicht zum Resonanzfall aufschaukelt. Weiter ist es erforderlich, dass das Signal der Wechselspannung, mit dem das piezoelektrische Anregungssystem 1 angesteuert wird, ebenfalls die gewünschte Resonanzfrequenz aufweist oder näherungsweise aufweist.

Die Vorrichtung der Figuren 1 und 2 ermöglicht es, die Eigenfrequenz der Vorrichtung über einen weiten Bereich ohne konstruktive Änderungen einzustellen und erreicht hierdurch, dass mit einer einzigen Vorrichtung ein großer Bereich von Resonanzfrequenzen zu testender Testobjekte abgedeckt werden kann. Beispielsweise kann die Vorrichtung über einen Frequenzbereich zwischen 0,3 und 35 kHz eingestellt werden.

Die Einstellbarkeit der Frequenz der erfindungsgemäßen Vorrichtung wird im betrachteten Ausführungsbeispiel durch die Möglichkeit erreicht, die Steifigkeit des piezoelektrischen Anregungssystems 1 einzustellen, insbesondere durch Variation der piezoelektrischen Scheiben 12, sowie durch die Möglichkeit, weitere Parameter der Vorrichtung einzustellen.

Insbesondere können durch die erfindungsgemäße Ausgestaltung der piezoelektrischen Scheiben 12 mit einer Lochung Anzahl und/oder Größe und/oder Material der Scheiben 12 variiert und damit die Steifigkeit des piezoelektrischen Anregungssystems 1 und die Eigenfrequenz der Vorrichtung eingestellt werden. Beispielsweise können die Anzahl der piezoelektrischen Scheiben 12 und/oder deren Querschnittsfläche und/oder deren Dicke bei konstanter oder sich ändernder Stapelhöhe eingestellt werden. Die Stapelhöhe der piezoelektrischen Scheiben 12 kann z.B. in einfacher Weise dadurch erhöht werden, dass die Gewindestange 4 mit ausreichender Länge bereitgestellt wird, so dass die Stapelhöhe bzw. der Abstand zwischen den Massen 2, 3 vergrößert werden kann.

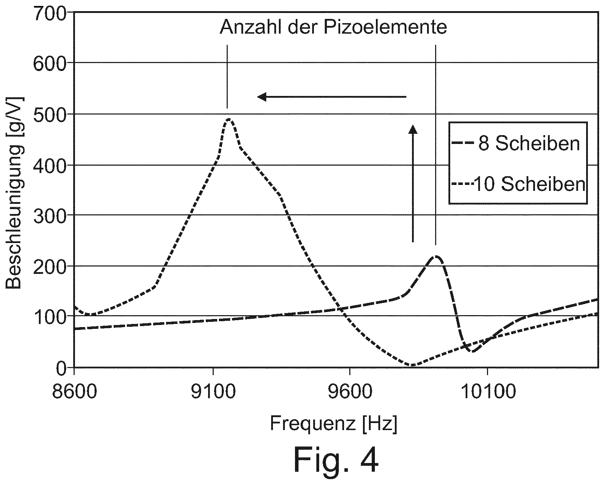

Des Weiteren können auch weitere Systemparameter wie z.B. die Betriebsspannung, die mechanische Vorspannung sowie die Größe der Massen 2, 3 bzw. die Massenverteilung zur Änderung bzw. zur gewünschten Einstellung der Eigenfrequenz der Vorrichtung geändert werden. Beispiele für den Einfluss dieser Parameter auf die Eigenfrequenz der Vorrichtung werden nachfolgend anhand der Figuren 4 bis 6 näher erläutert.

Die Figur 4 zeigt die Auswirkungen der Variation der Scheibenanzahl in einem Piezo-Stapel gemäß den Figuren 1 und 2 auf die Resonanzfrequenz. Dabei wurde eine Messung der Resonanzfrequenz zum einen bei einem Piezo-Stapel mit 8 Scheiben und zum anderen bei einem Piezostapel mit 10 Scheiben durchgeführt. Beide Varianten wurden mit der gleichen elektrischen Spannung betrieben und die Systemantwort wurde mit einem Beschleunigungssensor gemessen. In der Figur 4 ist die erfasste Beschleunigung als Funktion der Frequenz dargestellt. Es ist erkennbar, dass deutlich unterschiedliche Resonanzfrequenzen für die beiden Ausführungsvarianten bestehen. Dabei nimmt die Resonanzfrequenz mit zunehmender Anzahl von piezoelektrischen Scheiben ab, da die Erhöhung der Scheibenzahl zu einer Reduzierung der Steifigkeit des Kopplungssystems führt.

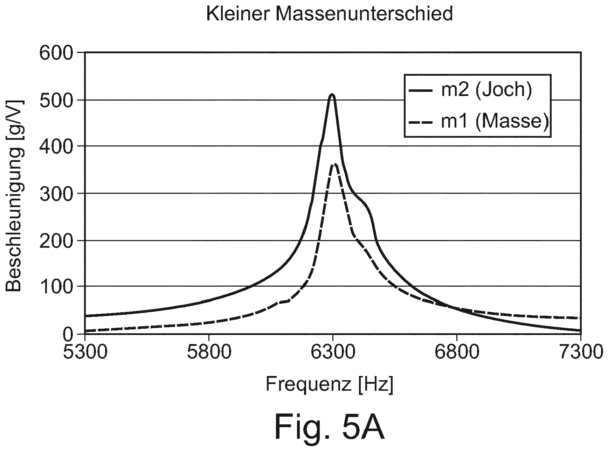

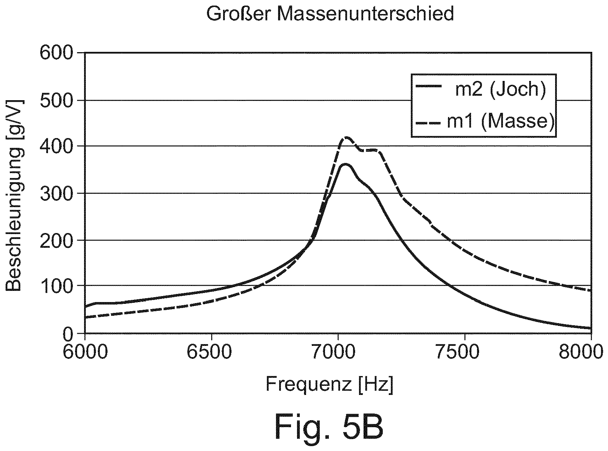

Die Figuren 5A und 5B zeigen den Einfluss der Massenverteilung der Massen 2, 3 auf Lage und Verlauf des Resonanzbereichs. Das Resonanzverhalten wurde wiederum mit einem Beschleunigungssensor gemessen. Bei der Messung der Figur 5A sind die beiden Massen 2, 3 (m2 und m1) annähernd gleich groß. In der Messung der Figur 5B ist die Masse 3 (m1) etwa nur halb so groß wie die Masse des Jochs 2 (m2). Es ist ersichtlich, dass der Frequenzbereich, in dem die Resonanz auftritt, bei der Figur 5A deutlich schmaler ist als bei der Figur 5B und zudem höhere Beschleunigungswerte aufweist. Dieses Ergebnis zeigt eine deutliche Abhängigkeit der Resonanzfrequenz von der Massenverteilung. Ein großer Massenunterschied führt dabei gemäß Figur 5B zu einem breiten Frequenzband im Resonanzbereich und einer kleineren Energieübertragung. Ein kleiner Massenunterschied führt dagegen gemäß Figur 5A zu einem schmalen Frequenzband im Resonanzbereich und einer größeren Energieübertragung.

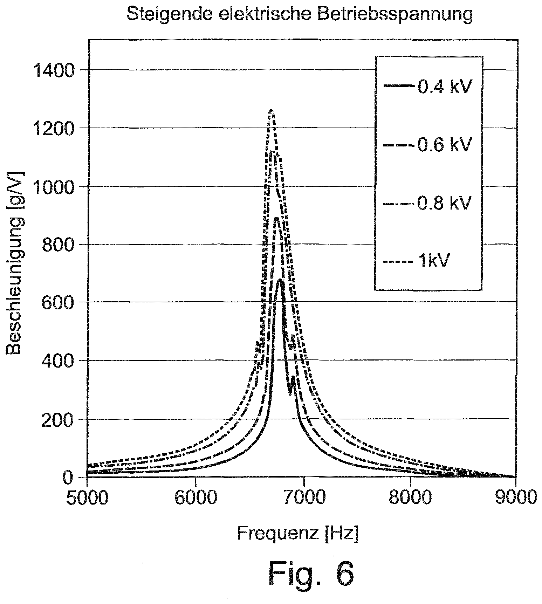

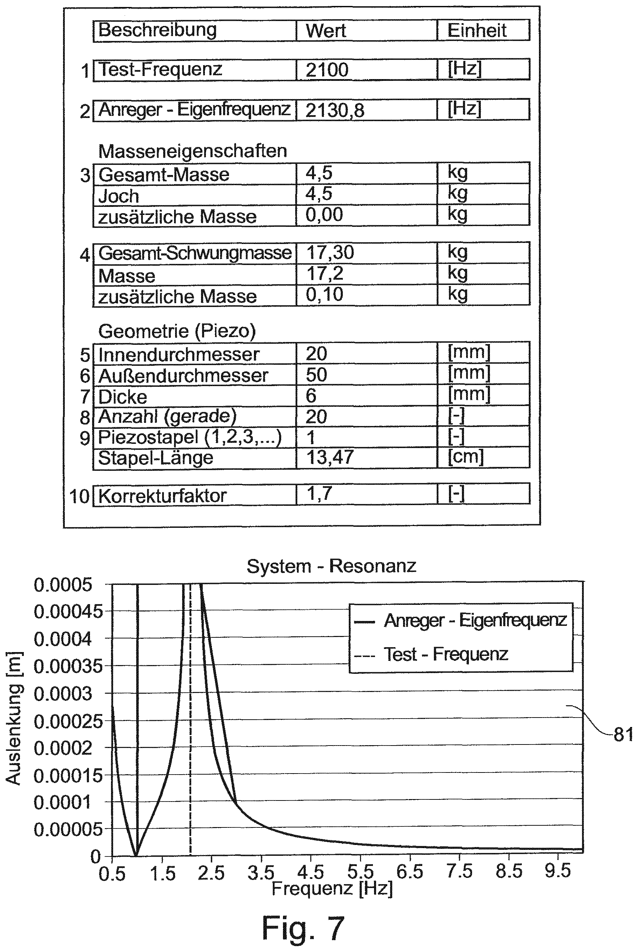

Die Figur 6 zeigt den Einfluss der elektrischen Betriebsspannung auf die Eigenfrequenz der Vorrichtung. Das generierte elektrische Signal wird über einen Verstärker in den Piezoerreger 12 geleitet. Bei der Untersuchung gemäß der Figur 7 wurde die Versorgungsspannung des Systems schrittweise von 0,4 kV auf 1 kV erhöht. Es wurden wieder Beschleunigungswerte gemessen und in Abhängigkeit von der Frequenz aufgetragen. Dabei ist zu erkennen, dass mit der Betriebsspannung die Beschleunigung proportional steigt. Gleichzeitig nimmt die Resonanzfrequenz mit zunehmender Betriebsspannung leicht ab.

Eine weitere, nicht gesondert dargestellte Variationsmöglichkeit zur Beeinflussung der Steifigkeit des piezoelektrischen Anregungssystems 1 besteht in der Variation der Scheibendicke der piezoelektrischen Scheiben 12 der Vorrichtung der Figuren 1 und 2. Wenn beispielsweise die Stapelhöhe durch die Verwendung dickerer piezoelektrischer Scheiben 12 erhöht wird, wird die Steifigkeit des Systems insgesamt gesenkt und damit die Eigenfrequenz reduziert.

Eine weitere Variationsmöglichkeit zur Beeinflussung der Steifigkeit des piezoelektrischen Anregungssystems 1 besteht in der Wahl der Querschnittsflächen der piezoelektrischen Scheiben 12. Je größer die Querschnittsfläche der Scheiben ist, desto größer ist auch die Steifigkeit des Systems, so dass mit der Querschnittsfläche die Eigenfrequenz der Vorrichtung zunimmt.

Die Einstellung einer gewünschten Eigenfrequenz bei einer erfindungsgemäßen Vorrichtung zur Erzeugung mechanischer Schwingungen kann grundsätzlich durch Versuche zur Einstellung der verschiedenen Parameter erfolgen. Jedoch ist es vorteilhaft, die Resonanzfrequenz einer Vorrichtung gemäß den Figuren 1, 2 analytisch berechnen zu können, so dass beispielsweise mittels eines Computerprogramms die Parameter zum Einstellen einer gewünschten Resonanzfrequenz geeignet ausgewählt werden können. Die durch das Computerprogramm ermittelten Parameter müssen dann nur noch bei der Vorrichtung konkret eingestellt werden. Hierfür ist es natürlich erforderlich, dass die Berechnung des Computerprogramms die tatsächlich auftretenden Eigenfrequenzen der Vorrichtung korrekt bestimmt.

Ein Ermüdungstest an einem Testobjekt wird dann derart durchgeführt, dass Eigenfrequenz der Vorrichtung auf die Resonanzfrequenz des Testobjektes (die bekannt ist) eingestellt wird, indem die mittels des Computerprogramms als geeignet festgestellten Parameter eingestellt werden, das Testobjekt in dem Joch 2 der Vorrichtung eingespannt und anschließend eine Wechselspannung an das Anregungssystem angelegt wird, wobei die angelegte Wechselspannung eine Frequenz aufweist, die gleich der Resonanzfrequenz des Testobjektes ist.

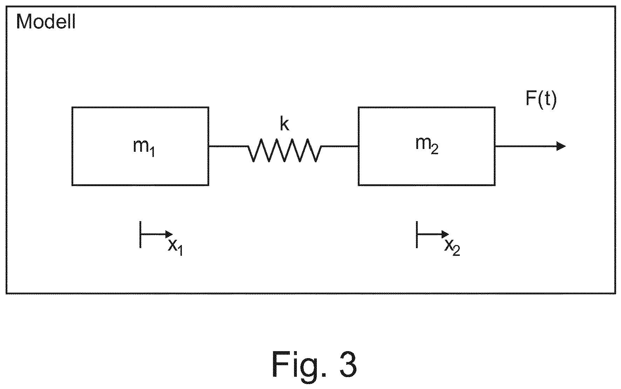

Zur analytischen Berechnung geht die erfindungsgemäße Lösung von einem mathematischen Modell aus, das die Vorrichtung der Figuren 1 und 2 als Zweimassenschwinger betrachtet. Dieses Modell ist in der Figur 3 dargestellt. Danach besitzt die eine Masse eine Masse m2 und die andere Masse eine Masse m1. Die beiden Massen m1, m2 sind durch eine Feder mit der Federkonstanten k miteinander gekoppelt, wobei die Federkonstante k der Steifigkeitskonstanten des Piezostapels entspricht, den die piezoelektrischen Scheiben 12 bilden. Im betrachteten Modell sind die beiden Massen m1, m2 jeweils ausschließlich in longitudinaler Richtung $x_1$, $x_2$ bewegbar. Eine Dämpfung wird vernachlässigt. Über die piezoelektrische Anregung wird eine periodische Kraft F(t) bereitgestellt.

Die Bewegungsgleichungen der Massen m1, m2 sind jeweils durch folgende Differenzialgleichung festgelegt:

$$\underline{M}\ddot{\underline{x}} + \underline{B}\dot{\underline{x}} - \underline{K}\underline{x} = \underline{f}(t)$$

wobei $\underline{\underline{M}}$ die Massenmatrix, $\underline{\underline{B}}$ die Dämpfungsmatrix, $\underline{\underline{K}}$ die Steifigkeitsmatrix, $\underline{x}$ die Bewegungsrichtung einer Masse und $\underline{f}$ die Frequenz angibt. Wie erläutert, wird eine Dämpfung vernachlässigt, so dass $\underline{\underline{B}} = 0$ ist.

Hieraus lässt sich als Resonanzfrequenz des Systems berechnen:

$$(f_2)_{1,2} = +/- \frac{1}{2\Pi} \sqrt{\frac{k(m_1 + m_2)}{m_1 m_2}}.$$

wobei m1 die erste Masse, m2 die zweite Masse, k die Steifigkeitskonstante des Gesamtsystems (d.h. der beiden Massen m1, m2, des piezoelektrischen Anregungssystems und ggf. weiterer Komponenten), und $(f_2)_{1,2}$ die Resonanzfrequenz bezeichnet. Die Begriffe "Steifigkeitskonstante" und "Steifigkeit" werden dabei im Kontext der vorliegenden Anmeldung als Synonyme betrachtet.

Um die Eigenfrequenz des Gesamtsystems eindeutig bestimmen zu können, muss gemäß der obigen Gleichung die Steifigkeitskonstante k bestimmt werden. Die Steifigkeitskonstante k des Gesamtsystems berechnet sich gemäß einem Ausführungsbeispiel nach folgender Formel:

$$k = \frac{1}{\sum_{i=1}^{n} \frac{1}{k_{m,i}} + \frac{1}{k_{Piezo}} + \frac{1}{k_{Elektrode}}} + k_{M16}$$

Dabei geben $k_{m,i}$ die Steifigkeitskonstante der i-ten Masse $m_i$, die auf die Gewindestange 4 aufgebracht ist, $k_{Piezo}$ die Steifigkeitskonstante der piezoelektrischer Scheiben 12, $k_{Elektrode}$ die Steifigkeitskonstante der Elekroden 13 und $k_{M16}$ die Steifigkeitskonstante der Gewindestange 4 an. Als Massen $m_i$, die auf die Gewindestange 4 aufgebracht sind, handelt es sich beim Ausführungsbeispiel der Figuren 1 und 2 um die Schwungmasse 3 und die Zusatzplatten 14, 15.

Somit wird die Steifigkeit und damit die Resonanzfrequenz des Gesamtsystems mitbestimmt durch die Steifigkeit des Stapels piezoelektrischer Scheiben 12, die erfindungsgemäß einstellbar ist. Hierbei wird angenommen, dass das System mechanisch vorgespannt ist und sich in Ruhe befindet. Die Steifigkeit des Stapels piezoelektrischer Scheiben 12 lässt sich berechnen als:

$$k_{piezo} = \frac{A}{S_{33}^E * d * n}$$

Dabei ist $k_{Piezo}$ die Steifigkeitskonstante der piezoelektrischer Scheiben, n die Anzahl der piezoelektrischen Scheiben, d die Dicke der piezoelektrischen Scheiben, A die Fläche einer piezoelektrischen Scheibe und $S_{33}^E$ der Elastizitätskoeffizient des Materials der piezoelektrischen Scheiben in deren Längsrichtung (d.h. in Richtung des Gewinderohrs 4).

Die hier bestimmte Steifigkeit beinhaltet geometrische Parameter der zur Anwendung kommenden piezoelektrischen Scheiben 12. Die Eigenfrequenz des Gesamtsystems ist von diesen Parametern abhängig und kann mittels der genannten Formeln mathematisch berechnet werden.

Die Figur 7 zeigt ein erstes Ausführungsbeispiel der Benutzeroberfläche bzw. Eingabemaske eines Computerprogramms, das eine solche mathematische Berechnung vornimmt. Auf der linken Seite der Benutzeroberfläche können bestimmte Parameter eingestellt werden. Beispielsweise können in den Feldern der Zeilen 3, 4 die beiden Massen 3, 2 der Vorrichtung der Figur 1 eingegeben werden. In den Feldern der Zeilen 5 bis 9 können Parameter der piezoelektrischen Scheiben 12 eingestellt werden, unter anderem Dicke (Zeile 7) und Anzahl (Zeile 8).

Die aufgrund dieser Parameter berechnete Eigenfrequenz wird in einer Anzeige 81 auch grafisch dargestellt. Es kann dadurch leicht erfasst werden, ob die eingestellten Parameter eine gewünschte Eigenfrequenz bereitstellen und, sofern dies nicht der Fall ist, kann zeitsparend eine Neueinstellung der Parameter zur Bereitstellung einer gewünschten Eigenfrequenz vorgenommen werden. Dabei kann auch vorgesehen sein, dass das Computerprogramm Vorschläge für eine Parameterwahl unterbreitet, die zu einer gewünschten Eigenfrequenz führt.

Das Computerprogramm, das diese Berechnung ausführt, kann zusätzlich einen Korrekturfaktor berücksichtigen (vgl. Zeile 10 der Figur 7), der die Abweichung zwischen einer ohne den Korrekturfaktor berechneten Resonanzfrequenz und einer experimentell ermittelten Resonanzfrequenz bei einer bestimmten Auswahl der Parameter berücksichtigt und ausgleicht.

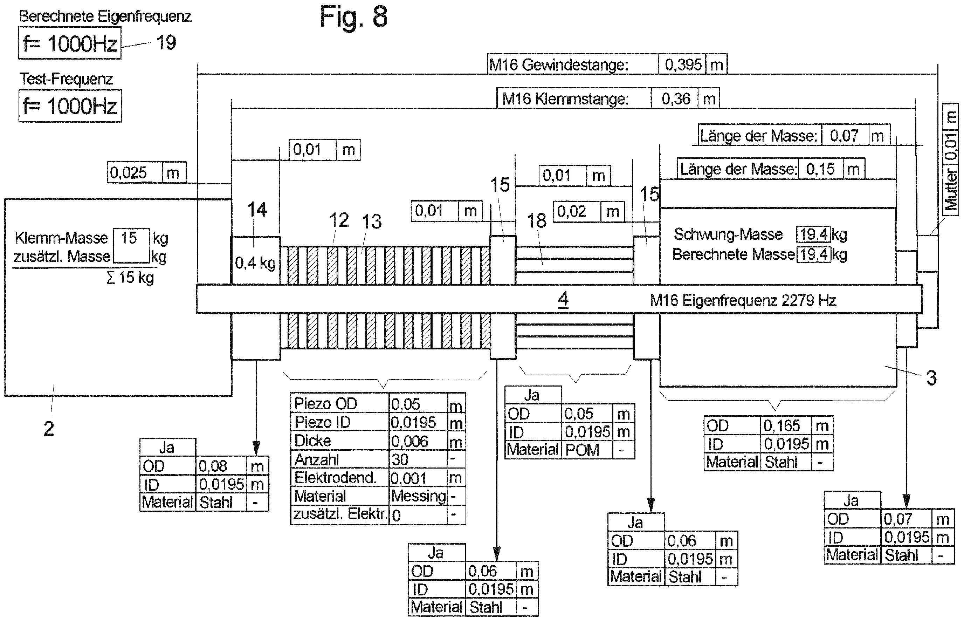

Die Figur 8 zeigt eine zweite Ausführungsvariante einer Benutzeroberfläche bzw. Eingabemaske eines Computerprogramms, das eine solche mathematische Berechnung vornimmt. Die Abbildung in dieser Eingabemaske repräsentiert schematisch eine mögliche Ausführung des piezoelektrischen Anregungssystems ähnlich den Figuren 1 und 2, mit zwei Massen 2, 3, einer Gewindestange 4 und einem piezoelektrischen Anregungssystems, das piezoelektrische Scheiben 12, Elektroden 13, Zusatzplatten 14, 15 und eine Abstandsmasse 18 aufweist.

Alle benötigten Systemparameter können in die einzelnen Felder eingegeben beziehungsweise durch einfache Auswahl aus einem Dropdown-Menü zugewiesen werden. Die einstellbaren Systemparameter sind insbesondere die geforderte Resonanzfrequenz f, der Außendurchmesser OD und der Innendurchmesser ID der jeweiligen Massen 3, 14, 15, 18 oder Piezoscheiben 12, das spezifische Material, die Materialdicke, die Massenlänge L, die Anzahl der piezoelektrischen Scheiben 12 und die Vorgabe der Klemmmasse.

Die aufgrund dieser Parameter berechnete Eigenfrequenz wird in einer Anzeige 19 als Zahl dargestellt. Es kann dadurch leicht erfasst werden, ob die eingestellten Parameter eine gewünschte Eigenfrequenz bereitstellen und, sofern dies nicht der Fall ist, kann zeitsparend eine Neueinstellung der Parameter zur Bereitstellung einer gewünschten Eigenfrequenz vorgenommen werden. Dabei kann auch vorgesehen sein, dass das Computerprogramm Vorschläge für eine Parameterwahl unterbreitet, die zu einer gewünschten Eigenfrequenz führt.

Die vorliegende Vorrichtung und das vorliegende Verfahren führen zu einer erheblichen Erhöhung der Möglichkeiten und der Effizienz von Ermüdungstests, die an Testobjekten durchgeführt werden. Dabei ist es möglich, mit nur einer Vorrichtung und in zeitsparender Weise eine gewünschte Eigenfrequenz bereitzustellen. Das Frequenzspektrum, das dabei abgedeckt werden kann, liegt beispielsweise im Bereich zwischen 0,3 und 35 kHz. Die vorliegende Lösung ist zusätzlich energiesparend, da die zugeführte Energie aufgrund der Erfüllung der Resonanzkriterien mit hohem Kopplungsgrad auf das Testobjekt überführt werden kann.

Die Erfindung beschränkt sich in der Ausgestaltung nicht auf die vorstehend dargestellten Ausführungsbeispiele, die lediglich beispielhaft zu verstehen sind. Beispielsweise sind die Ausgestaltungen des Jochs 2 und der weiteren Masse 3 nur beispielhaft zu verstehen. Auch das piezoelektrische Anregungssystem kann in anderer Weise ausgebildet und in anderer Weise im Hinblick auf seine Steifigkeit einstellbar sein. Des weiteren wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

## Patentansprüche

1. Vorrichtung zur Erzeugung mechanischer Schwingungen, die aufweist:

   - eine erste Masse (2),
   - eine zweite Masse (3), und
   - ein piezoelektrisches Anregungssystem (1), über das die erste Masse (1) und die zweite Masse (2) mechanisch miteinander gekoppelt sind, wobei das piezoelektrische Anregungssystem (1) eine Steifigkeit aufweist und das piezoelektrische Anregungssystem (1) eine Mehrzahl piezoelektrischer Scheiben (12) aufweist, die einen Stapel bilden,

   **dadurch gekennzeichnet, dass**
   die Steifigkeit des piezoelektrischen Anregungssystems (1) einstellbar ist, indem das piezoelektrische Anregungssystem (1) im Hinblick auf die Anzahl und/oder die Größe der piezoelektrischen Scheiben (12) variabel einstellbar ist.

2. Vorrichtung nach Anspruch 1, **dadurch gekennzeichnet, dass** die piezoelektrischen Scheiben (12) eine Lochung aufweisen, so dass die Scheiben (12) auf eine Verbindungsstange (4) aufschiebbar oder aufdrehbar sind.

3. Vorrichtung nach Anspruch 2, **dadurch gekennzeichnet, dass** die erste Masse (2) und die zweite Masse (3) über eine Verbindungsstange (4) miteinander verbunden sind und die piezoelektrischen Scheiben (12) auf die Verbindungsstange (4) aufschiebbar oder aufdrehbar sind.

4. Vorrichtung nach Anspruch 3, **dadurch gekennzeichnet, dass** die Verbindungsstange (4) als Gewindestange ausgebildet ist, die die erste Masse (2) und die zweite Masse (3) miteinander verbindet.

5. Vorrichtung nach einem der vorangehenden Ansprüche, **dadurch gekennzeichnet, dass** das piezoelektrische Anregungssystem (1) im Hinblick auf das Material der piezoelektrischen Scheiben (12) einstellbar ist.

6. Vorrichtung nach einem der vorangehenden Ansprüche, **dadurch gekennzeichnet, dass** an mindestens einer der Massen (2, 3) mehr als ein Befestigungsmittel (23, 24, 25) zur Befestigung des piezoelektrischen Anregungssystems (1) ausgebildet ist, wobei das piezoelektrische Anregungssystem (1) an jedem der Befestigungsmittel (23, 24, 25) wahlweise befestigbar ist.

7.  Vorrichtung nach Anspruch 6, soweit rückbezogen auf Anspruch 3, **dadurch gekennzeichnet, dass** die Befestigungsmittel (23, 24, 25) jeweils eine ebene Montagefläche und eine in dieser mittig angeordnete Bohrung (23a, 24a, 25a) zur Aufnahme der Verbindungsstange (4) aufweisen.

8.  Computer implementiertes Verfahren zur Berechnung der Resonanzfrequenz einer Vorrichtung zur Erzeugung mechanischer Schwingungen, die eine erste Masse (2), eine zweite Masse (3) und ein piezoelektrisches Anregungssystem (1) aufweist, wobei die beiden Massen (2, 3) über das piezoelektrische Anregungssystem (1) mechanisch miteinander gekoppelt sind und das piezoelektrische Anregungssystem (1) eine Mehrzahl piezoelektrischer Scheiben (12) aufweist, die einen Stapel bilden, und wobei die Steifigkeit des piezoelektrischen Anregungssystems (1) einstellbar ist,

    **dadurch gekennzeichnet, dass** das piezoelektrische Anregungssystem (1) im Hinblick auf die Anzahl und/oder die Größe der piezoelektrischen Scheiben (12) variabel einstellbar ist, mit den Schritten:

    - Erfassen von Parametern, die die Steifigkeit des piezoelektrischen Anregungssystems (1) definieren,
    - Berechnen der Resonanzfrequenz der Vorrichtung unter Verwendung dieser Parameter sowie der ersten und der zweiten Masse (2, 3),
    - wobei die Berechnung der Resonanzfrequenz auf der Grundlage der Bewegungsgleichungen eines Zweimassenschwingers erfolgt und eine Steifigkeit des piezoelektrischen Anregungssystems (1) durch die Anzahl und/oder die Größe der piezoelektrischen Scheiben (12) variabel eingestellt wird, um eine gewünschte Eigenfrequenz der Vorrichtung zu erreichen.

9.  Verfahren nach Anspruch 8, **dadurch gekennzeichnet, dass** die Resonanzfrequenz nach der Formel berechnet wird:

$$(f_2)_{1,2} = {}^{+}\!\!\!/_{-}\, \frac{1}{2\Pi} \sqrt{\frac{k(m_1 + m_2)}{m_1 m_2}} \; .$$

    wobei

    $m_1$ die erste Masse (2),
    $m_2$ die zweite Masse (3),
    k die Steifigkeitskonstante des Gesamtsystems ist, das die beiden Massen $m_1$, $m_2$ und das piezoelektrischen Anregungssystems (1) umfasst, und
    $(f_2)_{1,2}$ die Resonanzfrequenz bezeichnet.

10. Verfahren nach Anspruch 8 oder 9, **dadurch gekennzeichnet, dass** als Parameter, die die Steifigkeit des piezoelektrischen Anregungssystems (1) bestimmen, Anzahl, Größe und/oder Material piezoelektrischer Scheiben (12) bestimmt werden, die das Anregungssystem (1) aufweist.

11. Verfahren nach einem der Ansprüche 8 bis 10, **dadurch gekennzeichnet, dass** das piezoelektrische Anregungssystem (1) eine Mehrzahl piezoelektrischer Scheiben (12) und Elektroden (13) aufweist, die einen Stapel bilden und die auf eine Verbindungsstange (4) aufgeschoben oder aufgedreht sind, wobei die Steifigkeit des Gesamtsystems nach der Formel berechnet wird:

$$k = \frac{1}{\sum_{i=1}^{n} \frac{1}{k_{m,i}} + \frac{1}{k_{Piezo}} + \frac{1}{k_{Elektrode}}} + k_{M16}$$

    wobei

    k die Steifigkeitskonstante des Gesamtsystems,
    $k_{m,i}$ die Steifigkeitskonstante der jeweiligen, auf die Verbindungsstange (4) aufgeschobenen oder aufgedrehten Masse (3, 14, 15, 18),
$k_{Piezo}$ die Steifigkeitskonstante der piezoelektrischer Scheiben (12),
$k_{Elektrode}$ die Steifigkeitskonstante der Elekroden (13),
und $k_{M16}$ die Steifigkeitskonstante der Gewindestange (4) ist.

12. Verfahren nach Anspruch 11, **dadurch gekennzeichnet, dass** die Steifigkeitskonstante $k_{Piezo}$ wir folgt berechnet wird:

$$k_{Piezo} = \frac{A}{S_{33}^E * d * n}$$

wobei

$n$ die Anzahl der piezoelektrischen Scheiben (12),
$d$ die Dicke der piezoelektrischen Scheiben (12),
$A$ die Fläche einer piezoelektrischen Scheibe (12), und
$S^E_{33}$ der Elastizitätskoeffizient des Materials der piezoelektrischen Scheiben (12) in deren Längsrichtung ist.

13. Verfahren nach Anspruch 11 oder 12, **dadurch gekennzeichnet, dass** die Steifigkeitskonstanten $k_{Elektrode}$ und $k_{m,i}$ nach den folgenden Formeln bestimmen werden:

$$k_{Eletrode} = \frac{E * A_{ers}}{L * n}$$

$$k_{m,i} = \frac{E * A_{ers}}{L}$$

wobei

$n$ die Anzahl der identischen Elektroden (13),
$L$ die Länge der Massen (3, 14, 15, 18) und Elektroden (13) in Längsrichtung,
$A_{ers}$ die Ersatzquerschnittsfläche der jeweiligen Masse (3, 14, 15, 18) und Elektrode (13),
und $E$ das Elastizitätsmodul des jeweiligen Materials der Massen (3, 14, 15, 18) und Elektroden (13) ist, und

wobei die Ersatzquerschnittsfläche $A_{ers}$ anhand einer Fallunterscheidung in Abhängigkeit von der Massen- und Elektrodengeometrie wie folgt bestimmt wird:

$$\text{wenn } D_a \leq d_w, \text{gilt: } A_{ers} = \frac{\pi}{4}(D_a^2 - D_i^2)$$

$$\text{wenn } d_w \leq D_a \leq d_w + L, \text{gilt: } A_{ers} = \frac{\pi}{4}\left(d_w^2 - D_i^2\right) + \frac{\pi}{8}d_w(D_a - d_w)\left[\left(\sqrt[3]{\frac{L * d_w}{D_a^2}} + 1\right)^2 - 1\right]$$

$$\text{wenn } D_a > d_w + L, \text{gilt: } A_{ers} = \frac{\pi}{4}\left(d_w^2 - D_i^2\right) + \frac{\pi}{8}d_w * L\left[\left(\sqrt[3]{\frac{L * d_w}{(L + d_w)^2}} + 1\right)^2 - 1\right]$$

wobei

$D_a$ der Außendurchmesser der jeweiligen Masse (3, 14, 15, 18) und Elektrode (13),

$D_i$ der Innendurchmesser der jeweiligen Masse (3, 14, 15, 18) und Elektrode (13),

$d_w$ der Außendurchmesser der kraftübertragenden Fläche der jeweiligen Masse (3, 14, 15, 18) und Elektrode (13),

und L die Länge der jeweiligen Masse (3, 14, 15, 18) und Elektrode (13) in Längsrichtung (3,13), ist.

14. Computerprogramm mit Softwarecode zur Durchführung der Verfahrensschritte des Anspruchs 8, wenn das Computerprogramm auf einem Computer ausgeführt wird.

**Claims**

1. Device for generating mechanical oscillations, having:

   - a first mass (2),
   - a second mass (3), and
   - a piezoelectric excitation system (1) mechanically coupling the first mass (1) and the second mass (2) to one another, with the piezoelectric excitation system (1) having a stiffness, and the piezoelectric excitation system (1) having a plurality of piezoelectric wafers (12) forming a stack,

   **characterized in that**
   the stiffness of the piezoelectric excitation system (1) is settable by the fact that the piezoelectric excitation system (1) is variably settable with regard to the number and/ or size of the piezoelectric wafers (12).

2. Device in accordance with Claim 1, **characterized in that** the piezoelectric wafers (12) have holes, so that the wafers (12) can be slid or screwed onto a connecting rod (4).

3. Device in accordance with Claim 2, **characterized in that** the first mass (2) and the second mass (3) are connected to one another using a connecting rod (4) and that the piezoelectric wafers (12) can be slid or screwed onto the connecting rod (4).

4. Device in accordance with Claim 3, **characterized in that** the connecting rod (4) is designed as a threaded rod that connects the first mass (2) and the second mass (3) to one another.

5. Device in accordance with one of the preceding Claims, **characterized in that** the piezoelectric excitation system (1) is settable with regard to the material of the piezoelectric wafers (12).

6. Device in accordance with one of the preceding Claims, **characterized in that** at least one of the masses (2, 3) is provided with more than one fastening means (23, 24, 25) for fastening of the piezoelectric excitation system (1), with the piezoelectric excitation system (1) being optionally fastenable to each of the fastening means (23, 24, 25).

7. Device in accordance with Claim 6, if related to Claim 3, **characterized in that** the fastening means (23, 24, 25) each have a flat mounting surface and a hole (23a, 24a, 25a) arranged in the center of this mounting surface for receiving the connecting rod (4).

8. Computer-implemented method for calculating the resonance frequency of a device for generating mechanical oscillations, having a first mass (2), a second mass (3) and a piezoelectric excitation system (1), with the two masses (2, 3) being mechanically coupled to one another by the piezoelectric excitation system (1), and the piezoelectric excitation system (1) having a plurality of piezoelectric wafers (12) forming a stack, and with the stiffness of the piezoelectric excitation system (1) being settable, **characterized in that** the piezoelectric excitation system (1) is variably settable with regard to the number and/or size of the piezoelectric wafers (12), with the method including the following steps:

   - acquisition of parameters defining the stiffness of the piezoelectric excitation system (1),
   - calculation of the resonance frequency of the device using these parameters and the first and second mass (2, 3),
   - where the calculation of the resonance frequency is based on the movement equations of a two-mass oscillator, and a stiffness of the piezoelectric excitation system (1) is variably set by the number and/or size of the piezoelectric wafers (12), in order to achieve a requested proper frequency of the device.

9. Method in accordance with Claim 8, **characterized in that** the resonance frequency is calculated according to the following formula:

$$(f_2)_{1,2} = +/- \frac{1}{2\Pi} \sqrt{\frac{k(m_1 + m_2)}{m_1 m_2}}$$

where

$m_1$ is the first mass (2),
$m_2$ the second mass (3),
k the stiffness constant of the overall system including the two masses $m_1$, $m_2$ and the piezoelectric excitation system (1), and
$(f_2)_{1,2}$ indicates the resonance frequency.

10. Method in accordance with Claim 8 or 9, **characterized in that** the parameters determining the stiffness of the piezoelectric excitation system (1) are defined as the number, size and/or material of the piezoelectric wafers (12) of the excitation system (1).

11. Method in accordance with one of the Claims 8 to 10, **characterized in that** the piezoelectric excitation system (1) has a plurality of piezoelectric wafers (12) and electrodes (13) slid or screwed onto a connecting rod (4) and forming a stack, with the stiffness of the overall system being calculated according to the following formula:

$$k = \frac{1}{\sum_{i=1}^{n} \frac{1}{k_{m,i}} + \frac{1}{k_{Piezo}} + \frac{1}{k_{Elektrode}}} + k_{M16}$$

where

k is the stiffness constant of the overall system,
$k_{m,i}$ the stiffness constant of the respective mass (3, 14, 15, 18) slid or screwed onto the connecting rod (4),
$k_{Piezo}$ the stiffness constant of the piezoelectric wafers (12),
$k_{Elektrode}$ the stiffness constant of the electrodes (13), and
$k_{M16}$ the stiffness constant of the threaded rod (4).

12. Method in accordance with Claim 11, **characterized in that** the stiffness constant $k_{Piezo}$ is calculated as follows:

$$k_{Piezo} = \frac{A}{S_{33}^{E} * d * n}$$

where

n is the number of the piezoelectric wafers (12),
d the thickness of the piezoelectric wafers (12),
A the surface of a piezoelectric wafer (12), and
$S_{33}^{E}$ the elasticity coefficient of the material of the piezoelectric wafers (12) in their longitudinal direction.

13. Method in accordance with Claim 11 or 12, **characterized in that** the stiffness constants $k_{Elektrode}$ and $k_{m,i}$ are determined according to the following formulas:

$$k_{Eletrode} = \frac{E * A_{ers}}{L * n}$$

$$k_{m,i} = \frac{E * A_{ers}}{L}$$

where

n is the number of identical electrodes (13),
L the length of the masses (3, 14, 15, 18) and electrodes (13) in the longitudinal direction,
$A_{ers}$ the substitute cross-sectional area of the respective mass (3, 14, 15, 18) and electrode (13), and
E the modulus of elasticity of the respective material of the masses (3, 14, 15, 18) and electrodes (13), and

where the substitute cross-sectional area $A_{ers}$ is determined as follows as a function of a case distinction, depending on the geometry of the masses and electrodes:

$$\text{if } D_a \leq d_w, \text{ then } A_{ers} = \frac{\pi}{4}(D_a^2 - D_i^2)$$

$$\text{if } d_w \leq D_a \leq d_w + L, \text{ then } A_{ers} = \frac{\pi}{4}(d_w^2 - D_i^2) + \frac{\pi}{8}d_w(D_a - d_w)\left[\left(\sqrt[3]{\frac{L * d_w}{D_a^2}} + 1\right)^2 - 1\right]$$

$$\text{if } D_a > d_w + L, \text{ then } A_{ers} = \frac{\pi}{4}(d_w^2 - D_i^2) + \frac{\pi}{8}d_w * L\left[\left(\sqrt[3]{\frac{L * d_w}{(L + d_w)^2}} + 1\right)^2 - 1\right]$$

where

$D_a$ is the outside diameter of the respective mass (3, 14, 15, 18) and electrode (13),
Di the inside diameter of the respective mass (3, 14, 15, 18) and electrode (13),
$d_w$ the outside diameter of the force-transmitting area of the respective mass (3, 14, 15, 18) and electrode (13), and
L the length of the respective mass (3, 14, 15, 18) and electrode (13) in the longitudinal direction (3, 13).

14. Computer program with software code for performing the process steps of Claim 8 when the computer program is run on a computer.

**Revendications**

1. Dispositif destiné à produire des oscillations mécaniques, qui présente:

- une première masse (2),
- une seconde masse (3), et
- un système d'excitation piézoélectrique (1) par le biais duquel la première masse (1) et la seconde masse (2) sont couplées mécaniquement l'une à l'autre, sachant que le système d'excitation piézoélectrique (1) présente une rigidité et que le système d'excitation piézoélectrique (1) présente une pluralité de disques piézoélectriques (12) formant une pile,

**caractérisé en ce que**

la rigidité du système d'excitation piézoélectrique (1) est réglable par le fait que le système d'excitation piézoélectrique (1) est réglable de manière variable au niveau du nombre et/ou de la taille des disques piézoélectriques (12).

2. Dispositif selon la revendication n° 1, **caractérisé en ce que** les disques piézoélectriques (12) présentent des trous de manière à ce que les disques (12) puissent être enfilés ou vissés sur une tige de liaison (4).

3. Dispositif selon la revendication n° 2, **caractérisé en ce que** la première masse (2) et la seconde masse (3) sont reliées l'une à l'autre par le biais d'une tige de liaison (4) et que les disques piézoélectriques (12) peuvent être enfilés ou vissés sur la tige de liaison (4).

4. Dispositif selon la revendication n° 3, **caractérisé en ce que** la tige de liaison (4) est conçue sous forme de tige filetée qui relie ensemble la première masse (2) et la seconde masse (3).

5. Dispositif selon une des revendications précédentes, **caractérisé en ce que** le système d'excitation piézoélectrique (1) est réglable au niveau du matériau des disques piézoélectriques (12).

6. Dispositif selon une des revendications précédentes, **caractérisé en ce que** plus d'un moyen de fixation (23, 24, 25) est constitué sur au moins une des masses (2, 3) pour fixer le système d'excitation piézoélectrique (1), sachant que le système d'excitation piézoélectrique (1) est fixable au choix sur chacun des moyens de fixation (23, 24, 25).

7. Dispositif selon la revendication n° 6, pour autant que rattachée à la revendication n° 3, **caractérisé en ce que** les moyens de fixation (23, 24, 25) présentent chacun une surface de montage plane et un perçage (23a, 24a, 25a) disposé au centre de ladite surface de montage pour y loger la tige de liaison (4).

8. Procédé implémenté par ordinateur destiné à calculer la fréquence de résonance d'un dispositif destiné à produire des oscillations mécaniques, qui présente une première masse (2), une seconde masse (3) et un système d'excitation piézoélectrique (1), sachant que les deux masses (2, 3) sont couplées mécaniquement l'une à l'autre par le biais du système d'excitation piézoélectrique (1), et que le système d'excitation piézoélectrique (1) présente une pluralité de disques piézoélectriques (12) formant une pile, et que la rigidité du système d'excitation piézoélectrique (1) est réglable, **caractérisé en ce que** le système d'excitation piézoélectrique (1) est réglable de manière variable au niveau du nombre et/ou de la taille des disques piézoélectriques (12), le procédé comprenant les étapes suivantes:

- acquisition de paramètres qui définissent la rigidité du système d'excitation piézoélectrique (1),
- calcul de la fréquence de résonance du dispositif en utilisant ces paramètres ainsi que la première et la seconde masse (2, 3),
- sachant que le calcul de la fréquence de résonance a lieu sur la base des équations de mouvement d'un oscillateur à deux masses et qu'une rigidité du système d'excitation piézoélectrique (1) est réglée de manière variable par le nombre et/ou la taille des disques piézoélectriques (12) pour atteindre une fréquence propre souhaitée du dispositif.

9. Procédé selon la revendication n° 8, **caractérisé en ce que** la fréquence de résonance est calculée selon la formule suivante:

$$(f_2)_{1,2} = \frac{1}{2\Pi}\sqrt{\frac{k(m_1 + m_2)}{m_1 m_2}}$$

sachant que

$m_1$ est la première masse (2),
$m_2$ la seconde masse (3),
k la constante de rigidité du système global qui comprend les deux masses $m_1$, $m_2$ et le système d'excitation piézoélectrique (1), et que $(f_2)_{1,2}$ désigne la fréquence de résonance.

10. Procédé selon la revendication n° 8 ou n° 9, **caractérisé en ce que** sont définis comme paramètres qui déterminent la rigidité du système d'excitation piézoélectrique (1), le nombre, la taille et/ou le matériau des disques piézoélectriques (12) que présente le système d'excitation (1).

**11.** Procédé selon une des la revendications n° 8 à n° 10, **caractérisé en ce que** le système d'excitation piézoélectrique (1) présente une pluralité de disques piézoélectriques (12) et d'électrodes (13), qui forment une pile et sont enfilés ou vissés sur une tige de liaison (4), sachant que la rigidité du système global se calcule selon la formule suivante:

$$k = \frac{1}{\sum_{i=1}^{n} \frac{1}{k_{m,i}} + \frac{1}{k_{Piezo}} + \frac{1}{k_{Elektrode}}} + k_{M16}$$

sachant que

k est la constante de rigidité du système global,
$k_{m,i}$ la constante de rigidité de la masse respective (3, 14, 15, 18) enfilée ou vissée sur la tige de liaison (4),
$k_{Piézo}$ la constante de rigidité des disques piézoélectriques (12),
$k_{Electrode}$ la constante de rigidité des électrodes (13), et
$k_{M16}$ la constante de rigidité de la tige filetée (4).

**12.** Procédé selon la revendication n°11, **caractérisé en ce que** la constante de rigidité $k_{Piézo}$ se calcule comme suit:

$$k_{Piezo} = \frac{A}{S_{33}^{E} * d * n}$$

sachant que

n est le nombre des disques piézoélectriques (12),
d l'épaisseur des disques piézoélectriques (12),
A l'aire d'un disque piézoélectrique (12), et
$S_{33}^{E}$ le coefficient d'élasticité du matériau des disques piézoélectriques (12) dans leur sens longitudinal.

**13.** Procédé selon la revendication n° 11 ou n° 12, **caractérisé en ce que** les constantes de rigidité $k_{Electrode}$ et $k_{m,i}$ sont déterminées selon les formules suivantes:

$$k_{Eletrode} = \frac{E * A_{ers}}{L * n}$$

$$k_{m,i} = \frac{E * A_{ers}}{L}$$

sachant que

n est le nombre d'électrodes identiques (13),
L la longueur des masses (3, 14, 15, 18) et des électrodes (13) dans le sens longitudinal,
$A_{ers}$ l'aire de section équivalente de la masse (3, 14, 15, 18) et de l'électrode respectives (13), et
E le module d'élasticité du matériau respectif des masses (3, 14, 15, 18) et des électrodes (13), et

sachant que l'aire de section équivalente $A_{ers}$ est déterminée à l'aide d'une différenciation de cas en fonction de la géométrie des masses et des électrodes comme suit :

$$si \; D_a \leq d_w, \; alors \, A_{ers} = \frac{\pi}{4}(D_a^2 - D_i^2)$$

$$si\ d_w \leq D_a \leq d_w + L,\ alors\ A_{ers} = \frac{\pi}{4}\left(d_w^2 - D_i^2\right) + \frac{\pi}{8}d_w(D_a - d_w)\left[\left(\sqrt[3]{\frac{L * d_w}{D_a^2}} + 1\right)^2 - 1\right]$$

$$si\ D_a > d_w + L,\ alors\ A_{ers} = \frac{\pi}{4}\left(d_w^2 - D_i^2\right) + \frac{\pi}{8}d_w * L\left[\left(\sqrt[3]{\frac{L * d_w}{(L + d_w)^2}} + 1\right)^2 - 1\right]$$

sachant que

$D_a$ est le diamètre extérieur de la masse (3, 14, 15, 18) et de l'électrode respectives (13),
Di le diamètre intérieur de la masse (3, 14, 15, 18) et de l'électrode respectives (13),
dw le diamètre extérieur de la surface de transmission de force de la masse (3, 14, 15, 18) et de l'électrode respectives (13), et
L la longueur de la masse (3, 14, 15, 18) et de l'électrode respectives (13) dans le sens longitudinal (3, 13).

**14.** Programme informatique avec code de logiciel pour la réalisation des étapes du procédé de la revendication n° 8, quand le programme informatique est exécuté sur un ordinateur.

Fig. 1

Fig. 2

Fig. 3

Fig. 4

Kleiner Massenunterschied

Fig. 5A

Großer Massenunterschied

Fig. 5B

Fig. 6

| Beschreibung | Wert | Einheit |
|---|---|---|
| 1 Test-Frequenz | 2100 | [Hz] |
| 2 Anreger - Eigenfrequenz | 2130,8 | [Hz] |
| Masseneigenschaften | | |
| 3 Gesamt-Masse | 4,5 | kg |
| Joch | 4,5 | kg |
| zusätzliche Masse | 0,00 | kg |
| 4 Gesamt-Schwungmasse | 17,30 | kg |
| Masse | 17,2 | kg |
| zusätzliche Masse | 0,10 | kg |
| Geometrie (Piezo) | | |
| 5 Innendurchmesser | 20 | [mm] |
| 6 Außendurchmesser | 50 | [mm] |
| 7 Dicke | 6 | [mm] |
| 8 Anzahl (gerade) | 20 | [-] |
| 9 Piezostapel (1,2,3,...) | 1 | [-] |
| Stapel-Länge | 13,47 | [cm] |
| 10 Korrekturfaktor | 1,7 | [-] |

Fig. 7

Fig. 8

Berechnete Eigenfrequenz 19
f= 1000Hz

Test-Frequenz
f= 1000Hz

M16 Gewindestange: 0,395 m
M16 Klemmstange: 0,36 m

Länge der Masse: 0,07 m
Länge der Masse: 0,15 m
Mutter 0,01 m

Schwung-Masse 19,4 kg
Berechnete Masse 19,4 kg

M16 Eigenfrequenz 2279 Hz

0,01 m
0,02 m
0,01 m
0,01 m
0,025 m

14  0,4 kg

12 13

15    18    15    4    3

Klemm-Masse 15 kg
zusätzl. Masse kg
Σ 15 kg

2

| Piezo OD | 0,05 | m |
| Piezo ID | 0,0195 | m |
| Dicke | 0,006 | m |
| Anzahl | 30 | - |
| Elektrodend. | 0,001 | m |
| Material | Messing | - |
| zusätzl. Elektr. | 0 | - |

| Ja | | |
|---|---|---|
| OD | 0,07 | m |
| ID | 0,0195 | m |
| Material | Stahl | - |

| | 0,165 | m |
|---|---|---|
| OD | | |
| ID | 0,0195 | m |
| Material | Stahl | - |

| Ja | | |
|---|---|---|
| OD | 0,06 | m |
| ID | 0,0195 | m |
| Material | Stahl | - |

| Ja | | |
|---|---|---|
| OD | 0,05 | m |
| ID | 0,0195 | m |
| Material | POM | - |

| Ja | | |
|---|---|---|
| OD | 0,06 | m |
| ID | 0,0195 | m |
| Material | Stahl | - |

| Ja | | |
|---|---|---|
| OD | 0,08 | m |
| ID | 0,0195 | m |
| Material | Stahl | - |

27

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2503317 A
- DE 10114672
- EP 0758455 A